Europäisches Patentamt

European Patent Office

Office européen des brevets

(11) Publication number: **0 056 894**
**B1**

(12) **EUROPEAN PATENT SPECIFICATION**

(45) Date of publication of patent specification: **22.01.86**

(51) Int. Cl.⁴: **B 60 R 22/00**

(21) Application number: **81303914.6**

(22) Date of filing: **27.08.81**

(54) Safety belt webbing emergency locking apparatus.

(30) Priority: **22.01.81 US 227275**

(43) Date of publication of application:
**04.08.82 Bulletin 82/31**

(45) Publication of the grant of the patent:
**22.01.86 Bulletin 86/04**

(84) Designated Contracting States:
**DE FR GB IT SE**

(56) References cited:
**CH-A- 532 494**
**FR-A-2 215 846**
**FR-A-2 226 840**
**FR-A-2 383 677**
**US-A-3 504 867**

(73) Proprietor: **AMERICAN SAFETY EQUIPMENT CORPORATION**
**1400 Rankin Street**
**Troy Michigan 48084 (US)**

(72) Inventor: **Ziv, Avraham**
**9524 Whitaker Ave.**
**Sepulveda California 91343 (US)**

(74) Representative: **Potter, Willoughby Whatnall et al**
**ERIC POTTER & CLARKSON 14 Oxford Street**
**Nottingham NG1 5BP (GB)**

Courier Press, Leamington Spa, England.

# Description

This invention relates in general to safety belt systems employed in automotive vehicles for restraining passengers in their seats during emergency conditions encountered by the vehicle, and more particularly to safety belt restraint devices employed for restraining a single safety belt or belt webbing employed in such systems in the event of such emergency conditions.

It is presently common practice in the automotive industry to employ occupant restraint devices wherein safety belts employed in the systems are wound upon automatic, emergency locking safety belt retractors secured to the vehicle frame. It has also become apparent that there is a certain amount of safety belt webbing extension encountered on the locking of such retractors due to the tightening of belt webbing about the retractor spool and the extension of the webbing portions stored in the retractor.

A clamping device for use with a safety belt restraining device is disclosed in CH—A—532494 which operates to engage onto the belt webbing in response to an inertia responsive device. However with such a clamping device the clamping effect is used to restrain movement of the webbing so as to tension the webbing and thereby operate the main clamp of the device. Accordingly the device operates in response to an inertia change and also movement of the webbing. This is undesirable since it means that after actuation of the inertia responsive device undesired further movement of the webbing is required to cause clamping of the webbing.

It is therefore a primary object of the present invention to provide an emergency locking safety belt restraint which will reduce the amount of safety belt extension following activation of associated locking means in the event of an emergency condition.

More specifically, it is the object of the present invention to disclose and provide a safety belt webbing emergency locking apparatus which provides a quick acting positive restraint of the safety belt in the event of an emergency, reduces belt webbing extension after actuation of the emergency locking retractor due to webbing portions about the retractor spool tightening and extending about the spool and to provide such a positive restraint on the webbing without damaging the webbing and without interfering with the normal operation of an emergency locking retractor where the same is employed.

According to the present invention there is provided a safety belt webbing emergency locking apparatus comprising clamping means for engaging the webbing, inertia responsive means for operating the clamping means independently of webbing movement to engage the webbing in response to vehicle acceleration, or deceleration, of more than a predetermined amount characterised in that the clamping means includes a wedge shaped clamp member movably mounted between a stationary webbing abutment surface and an inclined surface spaced from said abutment surface, the webbing being arranged to pass between the abutment surface and the clamp member, the clamp member normally being positioned so that the webbing passes freely between itself and said abutment surface, the clamp member being movable along said inclined surface to a webbing clamping position in response to said inertia responsive means to force the clamp member against said abutment surface so as to clamp and prevent movement of said webbing therebetween.

The present invention also contemplates the provision of the aforementioned locking apparatus with an emergency locking retractor to provide a dual locking system wherein the retractor may be set to lock at low G levels and be self resetting for functioning in its normal manner to restrain vehicle passengers during severe maneuvering conditions of the vehicle while the locking apparatus can be set to operate at higher G levels and perform its quick acting positive restraint of the belt in the event of vehicle collision situations. The locking apparatus of the present invention is further provided in the exemplary embodiment to be manually reset after actuation to a webbing restraint position so as to provide for a very positive and continuing restraint of the safety belt and the associated vehicle occupant until such time as it is manually reset.

Reference is now made to the accompanying drawings, in which:—

Fig. 1 is a side elevational view of an exemplary safety belt emergency locking apparatus in accordance with the present invention;

Fig. 2 is a front view of the apparatus of Fig. 1;

Fig. 3 is a detailed section view of the apparatus of Fig. 2 taken therein along the plane III—III;

Fig. 4 is a front view of the apparatus of Figs. 1 through 3 shown in a safety belt locking condition;

Fig. 5 is a detailed section view of the apparatus of Fig. 4 taken therein along the plane V—V; and

Fig. 6 is a detailed section view taken in Fig. 5 along the plane VI—VI.

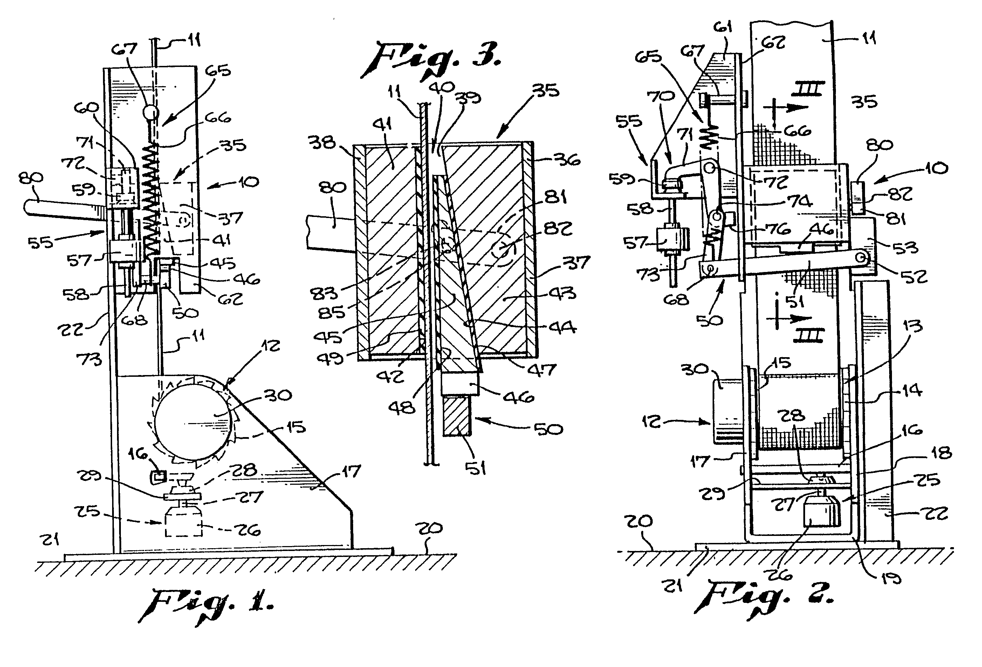

An exemplary embodiment of the safety belt emergency locking apparatus of the present invention will now be described in detail in association with the accompanying drawings. Referring initially to Figs. 1 and 2, a preferred exemplary embodiment of a vehicle inertia operated safety belt webbing clamping apparatus is illustrated generally at 10 for restraining safety belt webbing 11 in response to vehicle acceleration or deceleration of more than a predetermined amount and independently of movement of the webbing itself, as will be explained more fully hereinafter. In the exemplary embodiment of emergency locking apparatus, safety belt webbing 11 is further associated with an emergency locking retractor, indicated generally at 12, which may be of a standard type now in use commercially in automotive safety belt restraining systems. Alternatively, it may be made of light weight, even plastic material, to withstand only low loading with the higher loads being taken by the clamping means indicated generally at 10. As is well known in the art, the emergency locking retractor, indicated generally at 12, is provided with a belt storing spool 13 having side mounted ratchet wheels 14 and 15. A lock bar 16 is mounted at its ends in apertures in the side walls 17 and 18 of the U-shaped retractor frame 19 in known manner to pivot between ratchet wheel engaging and disengaging positions. The retractor frame 19 may be mounted directly to the vehicle support structure, indicated generally at 20, by a base plate 21 in the exemplary embodiment. A vertical pillar 22 may correspond to the "B" pillar of an automobile frame. The retractor operates in known manner in response to changes in vehicle inertia through the use of an inertia sensing means indicated generally at 25. Such inertia sensing means in the exemplary embodiment includes a pendulum type inertia mass 26 suspended by stem 27 from head 28 which overlies an aperture in cross brace 29 through which stem 27 is freely positioned. When the vehicle encounters an acceleration, or deceleration, of more than a predetermined amount, movement of pendulum mass 26 operates the locking bar 16 through underlying engagement head 27 to engage ratchets 14 and 15 and to thereby lock spool 13 against unwinding rotation and preventing further belt protraction. The retractor further includes a rewind spring within spring housing 30 for normally biasing the safety belt webbing toward a wound up, stored condition on the retractor spool.

When the safety belt retractor indicated generally at 12 is operated to a safety belt webbing restraining condition, as seen in Fig. 4, and the spool 13 is prevented from further belt unwinding rotation, there is still a tendency for the webbing 11 to continue to protract relative to the retractor by virtue of a tightening of the roll of webbing about the spool in addition to potential elongation of the webbing itself which is wound about the spool. As is particularly contemplated within the present invention, inertia responsive means are provided in accordance with the present invention for clamping the webbing portions outside of the retractor in the event of an emergency condition to thereby restrain the webbing through a direct clamping action which prevents the safety belt portions engaging the occupant from further protraction movement which might otherwise be allowed due to tightening of the webbing, or elongation of the webbing, portions wound about the spool 13. Such inertia operated safety belt webbing clamping means is illustrated generally at 10 in the within exemplary embodiment and will be described in detail hereinafter.

Referring to Fig. 3, clamping means, indicated generally at 35, are provided in the exemplary embodiment for selectively clamping the safety belt webbing 11 against further movement relative to the clamping means. The exemplary clamping means, indicated generally at 35, includes a housing 36 having a front wall 37, back wall 38 a right hand side wall 39 and a left hand side wall, unnumbered, mounted to bracket 62 which in turn is mounted to the B pillar 22 as subsequently described. Housing 36 is provided with a webbing passage, indicated generally at 40 through which the webbing 11 passes freely. A base clamp block 41 having a webbing facing abutment surface 42 is mounted within housing 36, as seen in Fig. 3, with an opposing front clamp block 43 presenting an inclined surface 44 facing toward the webbing and in spaced relation from surface 42 to not only provide for passage of webbing 11 therebetween, but also to provide clearance for operation of the clamping wedge member 45 as will be described hereinafter.

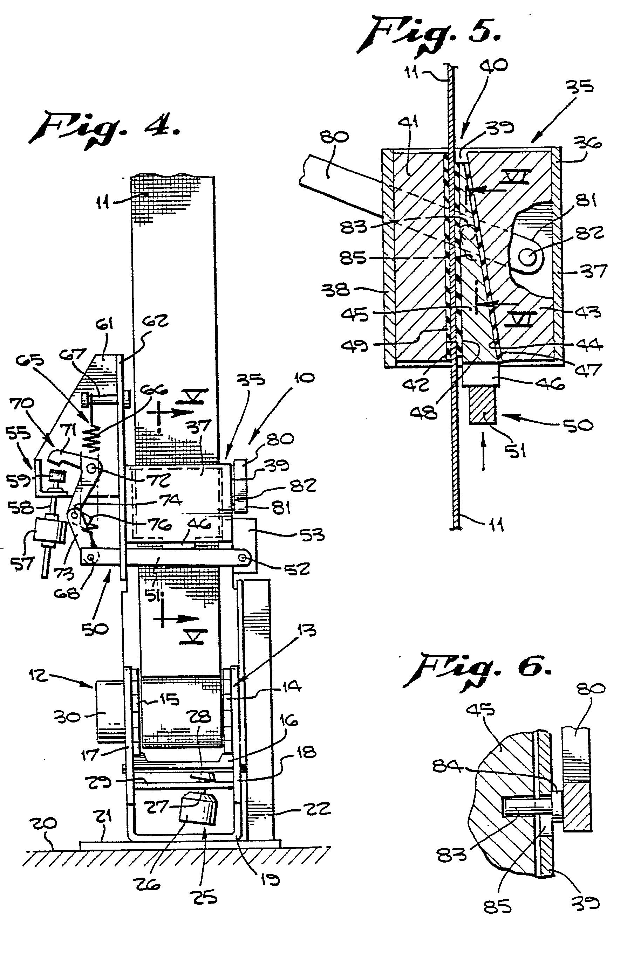

Wedge shaped clamp member 45 is provided with a depending foot portion 46 which cooperates with means, indicated generally at 50, for mounting the clamp member 45 for movement from a webbing disengaging position, illustrated in Fig. 3, to a webbing clamping position illustrated in Fig. 5. The rear surface of wedge member 45 may be bare metal or preferably coated with a layer 47 of material having a low coefficient of friction relative to the wedge member which is preferably made of a durable metal. As also particularly contemplated within the present invention, the front surface of wedge member 45 is provided with a layer 48 of a pliant, high strength, resilient material having a preferably relatively high coefficient of friction. Further, a layer 49 of the same material as layer 48 is preferably provided upon the abutment surface 42 of base block 41 so that on movement of wedge member 45 from the webbing disengaging position of Fig. 3 to the webbing clamping position of Fig. 5, wedge movement relative inclined surface 44 is facilitated by the low coefficient of friction material layer 47 and, more importantly, webbing 11 is engaged by the opposing high strength, resilient material layers 48 and 49 as wedge member 45 clamps the webbing relative housing 36, as seen in Fig. 5. The clamping action of wedge member 45 upon webbing 11 against block 41 is evenly distributed upon the webbing without snagging or tearing of the webbing which might otherwise occur between a coarse surface or metal to webbing engagement. By the use of a high strength material, such as pvc coated polyester webbing, which presents a relatively soft, resilient and pliable surface toward the webbing, it is believed that the layers 1/8 and 49 distribute the loading of the clamping members evenly over the webbing surface while still providing an effective positive clamping of the webbing relative to housing 36.

The clamping means of the exemplary embodiment, illustrated generally at 35 and described hereinbefore, is in accordance with the present invention, operated to the clamping position of Fig. 5 in response to changes in inertia experienced by the vehicle in which the emergency locking apparatus is installed. Importantly for purposes of the present invention, the clamping means is operated independently of movement of the webbing so as to quickly clamp the webbing in response to the emergency condition, as opposed to being operated in response to movement of the webbing 11. In the exemplary embodiment, inertia responsive means, indicated generally at 55, are provided for operating the clamping means, indicated generally at 35, to the webbing locking position of Fig. 5. Such inertia responsive means cooperates with the aforementioned means for mounting the wedge member 45, indicated generally at 50. In the exemplary embodiment, such mounting means include the provision of a support bar 51 pivotally mounted by pivot 52 to a support plate 53 secured to housing 46. As can be seen from a comparison of Figs. 2 and 4, pivotal movement of support bar 51 from the position of Fig. 2 in an upward direction to the position of Fig. 4 moves the wedge member 45, via its foot 46 from the webbing release position of Fig. 3 to the webbing clamping position of Fig. 5.

Biasing means, indicated generally at 65, are provided in the exemplary embodiment for normally biasing the clamping wedge member 45 toward the webbing clamping position of Fig. 5. In the exemplary embodiment, such biasing means, indicated generally at 65, include the provision of coil spring 66 mounted at its upper end to post 67 and at its lower end to a pivot pin 68 engaged in the other free end of support bar 51.

Releasable retaining means, indicated generally at 70, are provided in the exemplary embodiment for holding bar 51 normally against the bias of spring 66. In the exemplary embodiment, such retaining means include the provision of a geometric, or "over center" locking linkage including trigger link 71, having a generally S configuration, pivoted at its approximate center by pivot pin 72 to bracket 61. Bracket 61 is mounted by its back plate 62 to the vehicle frame such as member 22 which is exemplary of the vehicle B pillar structure. The locking linkage includes in addition to trigger link 71, the connecting link 73 which is pivoted at pin 74 to the lower end of link 71 and at pin 68 to the bar 51. The geometry of links 71 and 73 at their intersection adjacent pivot 72 is provided so as to prevent over center movement of the linkage beyond the position illustrated in Fig. 2, wherein bar 51 is locked against the bias of spring 66. In addition, the lower free end 76 of link 71 may be provided to abut the bracket wall 62 to also limit such over center movement. Spring means may also be provided in known manner, per se, to urge the link 71 and 73 into the over center position of Fig. 2.

Vehicle inertia sensor means are provided including a pendulum type inertial mass 57 suspended in adjustable manner upon threaded stem 58 which in turn is suspended by head 59. In the event of vehicle acceleration, or deceleration of more than a predetermined amount, which is determined by the positioning of mass 57 vertically along stem 58, the mass 57 and its associated head 59 will act as a tripping means for tripping linkage 71, 73. As head 59 tilts beneath trigger link 71 in Fig. 2, its rotative movement about pivot 72 moves the pivot 74 to the left in Fig. 2 allowing an unblocking position for the linkage to be assumed, as seen in Fig. 4, under the urging of spring 66 which biases arm 51 upward in Fig. 4. Such tripping action of linkage 71, 73 acts very rapidly in response to movement of mass 57 such that the clamping means, indicated generally 35, is quickly activated to clamp webbing 11 in a manner unrelated to movement of the webbing and independently of any concurrent restraint action the retractor, indicated generally at 12, may be applying to webbing 11.

Means are provided for resetting the clamping wedge member 45 to the webbing release position of Fig. 3 following its activation to the webbing clamping position of Fig. 5. As is apparent from the foregoing description, spring 66 holds arm 51 in a raised position, as seen in Fig. 4, when the pendulum mass 57 has acted upon linkage 71, 73. In the exemplary embodiment, such means for resetting the positioning of wedge block 45 include the provision of reset handle 80 which is pivotally mounted at its lower end 81 via pivot pin 82 to the housing wall 39. A cam pin 83 is provided on handle 80, as best seen in Figs. 3, 5 and 6, for engaging wedge member 45 directly. As best seen in Fig. 6, cam pin 83 is mounted by boss 84 to handle 80 and passes through an elongaged aperture 85 in housing wall 39 to facilitate moving wedge member 45 from the position of Fig. 5, back to the position of Fig. 3 by manually pivoting handle 80 from the position of Fig. 5, in a downward direction, to the position of Fig. 3.

As should now be apparent to those skilled in the art, from the foregoing detailed description, the exemplary vehicle inertia operated safety belt webbing clamping means illustrated generally at 10 may be used as the primary, or only, belt locking means or, as illustrated, in association with an emergency locking safety belt retractor to provide a dual locking system as illustrated. In a dual locking system, as illustrated, the safety belt retractor mechanism indicated generally at 12 may be provided to lock up at a relatively low vehicle acceleration, or deceleration rate, such as .7G's. This setting for the retractor will provide for restraining the safety belt in the event of sudden deceleration of the vehicle such as occurs during severe braking. The safety belt webbing clamping means, indicated generally at 10, could be set to be activated in response to a more severe emergency condition as might produce a higher G level on the order of as high as 5G's. In such a system, minor changes in vehicle inertia as occurs during non vehicle collision maneuvering will provide for a safety belt restraint, by locking of the retractor indicated generally at 12, while a more severe emergency situation as might be occasioned by vehicle collision will cause activation of the positive acting belt restraint provided for by the high strength, high load receiving clamping apparatus indicated generally at 10 herein. In such an arrangement, the retractor can

4

be made of a more light weight, even plastic material, construction as compared to current retractors in commercial use. Alternatively, the clamping apparatus indicated generally at 10 can be provided as the primary, or sole safety belt restraining means and could be set to be activated at a lower G level as desired.

While a single wedge member 45 is illustrated in the present embodiment, it should be understood by those skilled in the art that a pair of opposing wedges, as by a symmetrical arrangement of wedges 45 with inclined surfaced clamp blocks 43, could be employed with actuation by a single biasing means. Also, the actuation of the wedge, or wedges, to a clamping position can be powered by alternative means other than spring means, such as by a electrically driven solenoid, a pyrotectic device or the like where the activation thereof is in response to changes in vehicle inertia.

**Claims**

1. A safety belt webbing emergency locking apparatus comprising clamping means (35) for engaging the webbing (11), inertia responsive means (55) for operating the clamping means independently of webbing movement to engage the webbing in response to vehicle acceleration, or deceleration, of more than a predetermined amount characterised in that the clamping means includes a wedge shaped clamp member (45) movably mounted between a stationary webbing abutment surface (42) and an inclined surface (44) spaced from said abutment surface, the webbing (11) being arranged to pass between the abutment surface (42) and the clamp member (45), the clamp member normally being positioned so that the webbing passes freely between itself and said abutment surface (44), the clamp member being movable along said inclined surface to a webbing clamping position in response to said inertia responsive means (55) to force the clamp member against said abutment surface so as to clamp and prevent movement of said webbing therebetween.

2. Apparatus according to Claim 1 wherein a high strength resilient material (48, 49) is provided on said webbing abutment surface and upon a surface of said clamp member facing said webbing whereby said material engages opposite sides of said webbing as said webbing is clamped between said abutment surface and said clamp member.

3. Apparatus according to Claim 2 wherein said high strength resilient material has a high coefficient of friction.

4. Apparatus according to Claim 1, 2 or 3 wherein said inertia responsive means comprises:

biasing means (65) for normally biasing said clamp member toward said webbing clamping position;

releasable retaining means (70) for normally holding said clamp member against movement toward said webbing clamping position; and vehicle inertia activated tripping means (57, 59) for operating said releasable retaining means to a release position whereby said clamp member is moved by said biasing means to said webbing clamping position.

5. Apparatus according to Claim 4 wherein the clamp member is mounted on a pivotally mounted support bar (51) and said biasing means (65) comprises a spring (66) operably connected to said support bar.

6. Apparatus according to Claim 5 wherein said releasable retaining means comprises an over centre linkage (71, 73) operably connected between said vehicle inertia activated tripping means (57, 59) and said support bar (51) whereby said linkage normally holds said bar against the bias of said spring and is released by action thereon of said vehicle inertia activated tripping means.

7. Apparatus according to Claim 6 wherein said vehicle inertia activated tripping means comprises an inertia sensing mass (57) and associated means (58, 59) for engaging said over centre linkage means whereby movement of said mass operates said linkage means to release position.

8. In combination, an emergency locking retractor (12) and a locking apparatus according to any preceding claim.

**Revendications**

1. Appareil de blocage en cas de détresse de la sangle d'une ceinture de sécurité comprenant des moyens de serrage (5) destinés à attaquer la sangle (11), des moyens sensibles à l'inertie (55) destinés à actionner les moyens de serrage indépendamment du mouvement de la sangle pour attaquer la sangle en réponse à une accélération ou décélération du véhicule supérieure à une valeur prédéterminée, caractérisé en ce que les moyens de serrage comprennent un élément de serrage (45) en forme de coin monté pour pouvoir se déplacer entre une surface fixe (42) d'appui de la bande et une surface inclinée (44) espacée de ladite surface d'appui, la sangle (11) étant agencée pour passer entre la surface d'appui (42) et l'élément de serrage (45), l'élément de serrage étant normalement positionné de manière que la sange passe librement entre cet élément de serrage et ladite surface d'appui (44), l'élément de serrage pouvant se déplacer le long de ladite surface inclinée pour prendre une position de serrage de la sangle en réponse auxdits moyens (55) sensibles à l'inertie pour appliquer l'élément de serrage à force contre ladite surface d'appui, de manière à serrer la bande et à l'empêcher de se déplacer entre cet élément et la surface d'appui.

2. Appareil selon la revendication 1, dans lequel une matière élastique à haute résistance (48, 49) est prévue sur ladite surface d'appui de la bande et sur une surface dudit élément de serrage qui regarde ladite sangle, de sorte que ladite matière attaque les faces opposées de ladite sangle lorsque cette sangle est serrée entre ladite surface d'appui et ledit élément de serrage.

3. Appareil selon la revendication 2, dans lequel ladite matière élastique à haute résistance possède un haut coefficient de frottement.

4. Appareil selon l'une des revendications 1, 2 et 3, dans lequel lesdits moyens sensibles à l'inertie comprennent: des moyens de sollicitation (65) servant à solliciter normalement ledit élément de serrage vers ladite position de serrage de la sangle; des moyens de retenue déclenchables (70) servant à maintenir normalement ledit élément de serrage à l'encontre de son mouvement vers ladite position de serrage de la sangle; et des moyens de déclenchement (57, 59) activés par l'inertie du véhicule pour manoeuvrer lesdits moyens de retenue déclenchables et les amener à une position de déclenchement sous l'effet de laquelle ledit élément de serrage est amemé par lesdits moyens de sollicitation à ladite position de serrage de la sangle.

5. Appareil selon la revendication 4, caractérisé en ce que l'élément de serrage est monté sur une barrette support (51) montée oscillante et lesdits moyens de sollicitation (65) comprennent un ressort (66) relié fonctionnellement à ladite barrette support.

6. Appareil selon la revendication 5, dans lequel lesdits moyens de retenue déclenchables comprennent une tringlerie à franchissement de point mort (71, 73) interposée fonctionnellement entre lesdits moyens de déclenchement (57, 59) activés par l'inertie du véhicule et ladite barrette support (51), de sorte que ladite tringlerie retient normalement ladite barrette à l'encontre de la sollicitation dudit ressort et qu'elle est déclenchée par l'action exercée sur cette tringlerie par les moyens de déclenchement activés par l'inertie du véhicule sur cette tringlerie.

7. Appareil selon la revendication 6, dans lequel lesdits moyens de déclenchement activés par l'inertie du véhicule comprennent une masse (57) sensible à l'inertie et des moyens (58, 59) qui lui sont associés pour attaquer ladite tringlerie à franchissement de point mort, de sorte que le mouvement de ladite masse actionne ladite tringlerie pour l'amener à la position de déclenchement.

8. Combinaison formée d'un enrouleur à blocage en cas de détresse (12) et d'un appareil de blocage selon l'une quelconque des revendications précédentes.

**Patentansprüche**

1. In Notfällen sperrende Vorrichtung für Sicherheitsgurte mit einer Klemmeinrichtung (35) zum Zusammenwirken mit dem Gurtband (11), einer auf Trägheitsänderungen ansprechenden Einrichtung (55) zur Betätigung der Klemmeinrichtung unabhängig von der Gurtbandbewegung zwecks Zusammenwirken mit dem Gurtband als Folge einer Fahrzeugbeschleunigung oder -verzögerung um mehr als einen vorbestimmten Betrag, dadurch gekennzeichnet, daß die Klemmeinrichtung ein keilförmiges Klemmteil (45) aufweist, das beweglich zwischen einer stationären Gurtbandanschlagfläche (42) und einer geneigten, mit Abstand zur Anschlagfläche angeordneten Fläche (44) vorgesehen ist, daß das Gurtband so angeordnet ist, daß es zwischen der Anschlagfläche (42) und dem Klemmteil (45) verläuft, daß das Klemmteil normalerweise so angeordnet ist, daß das Gurtband frei zwischen ihm und der Anschlagfläche (44) verläuft, daß das Klemmteil längs der geneigten Fläche in eine das Gurtband einklemmende Position als Folge der Trägheitseinrichtung (55) bewegbar ist, um das Klemmteil gegen die Anschlagfläche zu drücken und hierdurch das Gurtband dazwischen zu verklemmen und dessen Bewegung zu vermeiden.

2. Vorrichtung nach Anspruch 1, dadurch gekennzeichnet, daß auf der Gurtbandanschlagfläche und auf einer Fläche des Klemmteils im Bereich des Gurtbands ein federndes Material (48, 49) hoher Festigkeit vorgesehen ist, wobei das Material beim Klemmen des Gurtbandes zwischen Anschlagfläche und Klemmteil mit gegenüberliegenden Seiten des Gurtbandes zusammenwirkt.

3. Vorrichtung nach Anspruch 2, wobei das federnde Material hoher Festigkeit einen großen Reibungskoeffizienten aufweist.

4. Vorrichtung nach Anspruch 1, 2 oder 3, wobei die auf Trägheit ansprechende Einrichtung umfaßt:

eine Vorspanneinrichtung (65), um normalerweise das Klemmteil in Richtung auf die Gurtband-Klemmposition vorzuspannen,

eine lösbare Rückhalteeinrichtung (70), um normalerweise das Klemmteil von einer Bewegung in die Gurtband-Klemmposition abzuhalten und

eine durch die Fahrzeugträgheit aktivierte Auslöseeinrichtung (57, 59) zur Betätigung der lösbaren Rückhalteeinrichtung in eine Freigabeposition, wobei das Klemmteil durch die Vorspanneinrichtung in eine Gurtband-Klemmposition bewegt wird.

5. Vorrichtung nach Anspruch 4, wobei das Klemmteil verschwenkbar an einer Lagerstange (51) angeordnet ist und die Vorspanneinrichtung (65) eine betriebsmäßig mit der Lagerstange verbundene Feder (66) aufweist.

6. Vorrichtung nach Anspruch 5, wobei die lösbare Rückhalteeinrichtung ein Endlagen-Sperrgestänge (71, 73) aufweist, das betriebsmäßig zwischen die von der Fahrzeugträgheit aktivierte Auslöseeinrichtung (57, 59) und die Lagerstange (51) geschaltet ist, während das Gestänge die Lagerstange normalerweise gegen die Vorspannung der Feder hält und durch Einwirkung der durch die Fahrzeugträgheit aktivierten Auslöseeinrichtung hierauf lösbar ist.

7. Vorrichtung nach Anspruch 6, wobei die durch die Fahrzeugträgheit aktivierte Auslöseeinrichtung eine Trägheitsfühlmasse (57) und eine zugeordnete Einrichtung (58, 59) zum Zusammenwirken mit dem Endlagensperr-Gestänge aufweist, während eine Bewegung der Masse das Gestänge in eine Freigabeposition bewegt.

8. In Kombination eine in Notfällen sperrende Einziehvorrichtung (12) und eine Sperrvorrichtung nach irgend einem der vorhergehenden Ansprüchen.

Fig. 3.

Fig. 1.

Fig. 2.

0 056 894

Fig. 4.

Fig. 5.

Fig. 6.